# EUROPEAN PATENT APPLICATION

(11) **EP 0 806 227 A1**
(43) Date of publication of application: **12.11.1997**
(21) Application number: 97107240.0
(22) Date of filing: 30.04.1997
(51) Int. Cl.: A63C 5/00, A63C 5/03, A63C 5/12, B62B 13/04, B62B 13/08

(54) **Snow driving device**

(30) Priority: 02.05.1996 IT MI960854
(71) Applicant: Levi, Giorgio, Borrisokane, CO Tipperary (IE)
(72) Inventor: Levi, Giorgio, Borrisokane, CO Tipperary (IE)
(74) Representative: Cicogna, Franco

(57) **Abstract**

A device for practicing winter sports and for driving on snow in general comprises a main shoe (2) and a steering shoe (3) which is driven by a handlebar (4). The handlebar is coupled to the steering shoe in a swinging and preloaded manner, so as to absorb impacts and allow the handlebar to be collapsed to a stored condition of the device.

With respect to prior snow implements, such as skis and snow skates, the inventive device is much more stable and can be used in a much more simple manner.

## Description

### BACKGROUND OF THE INVENTION

The present invention relates to a snow driving device, which can be easily driven both on slanted and on flat paths. The invention also relates to a method for making the subject device or shoe.

Among the most common implements for allowing people to move on snow, both for sports and transportation purposes, skis, snow-boards and sleighs are mentioned.

With respect to the first two types of snow implements, it should be pointed out that they require complex training efforts and, accordingly, are mainly used by young people rather skilled in winter sports. On the other hand, they can not be used by unskilled persons or by persons being afraid of possible falling damages.

Actually, skis and snow-boards are unstable implements requiring great skillness for properly holding the required equilibrium mainly on downhill paths: thus, prior snow implements do not allow a lot of persons to properly practice winter sports.

Sleighs, on the other hand, though they are safer and much more stable than skis and snow-boards, have a comparatively poor performance, thereby the use of these implements is mainly limited to children. Moreover, snow sleighs have a comparatively large size and poor handling capabilities, so that they do not constitute a flexible transport and entrainment means.

Accordingly, it should be desirable to meet specific requirements of a lot of persons desiring to easily practice snow sports in a very safe conditions and without any fatiguing training activities.

### SUMMARY OF THE INVENTION

Thus, the aim of the present invention is to provide a winter sports practicing implement and, in particular, a device for transporting a person on snow, which is very stable and adapted to be easily used.

Within the scope of the above mentioned aim, a main object of the present invention is to provide such a snow driving device which can be easily driven both on flat and sloping surfaces.

Another object of the present invention is to provide such a snow driving device the use of which can be easily learned, likewise to a sleigh and which, in the meanwhile, is provided with comparatively small size, and can be also used on ski-lifts and the like.

Yet another object of the present invention is to provide a method for quickly and inexpensively making the above mentioned snow driving device.

According to one aspect of the present invention, the above mentioned aim and objects are achieved by a snow driving device having the features claimed in claims 1 to 15.

The subject snow driving device is in particular characterized in that said device is provided with a main supporting shoe for supporting a person weight, as well as with steering means for steering said main shoe, said steering means including an easy to be operated steering device.

According to further features of the present invention, the above mentioned steering means comprise a secondary shoe arranged on the front of the main shoe and adapted to turn on the sliding plane of the device, said steering device including a steering handlebar for controlling the mentioned steering shoe with respect to the main shoe.

According to further features of the present invention, are moreover provided rotary supporting means for rotatably supporting said steering shoe with respect to the main shoe, said means being provided at the connection region of said shoes.

The snow driving device according to the invention is moreover characterized in that said handlebar comprises a contoured rod element including a gripping handle, as well as a foot element engaging on said steering shoe, so as to allow said steering shoe to be controlled by the handlebar.

The above mentioned rotary supporting means rotatably supporting said steering shoe are in turn constituted, according to further features of the snow driving device according to the invention, by a bracket which is coupled, on a side, to said steering shoe and, on another side, to the handlebar foot element, said bracket being moreover provided with an engagement pin for allowing the steering shoe to turn with respect to the main shoe.

According to further features of the snow driving device according to the invention, is moreover provided an articulated coupling assembly for coupling the foot element of said handlebar to said steering shoe, preloading means being moreover arranged at said articulated coupling assembly for absorbing possible impacts which would be dangerous for an user.

According to yet other features of the present invention, the front portion of the main shoe is raised and mounted over a corresponding rear portion of said steering shoe. Between the mentioned portions, which are of a mutually removable type, a shock absorbing element can also be arranged.

The snowing driving device according to the present invention is characterized furthermore by the fact that the above mentioned gripping handles of said handlebar are of a removable type. To that end, according to further features of the present invention, each gripping handle comprises joint means, for example of a bayonet type, for coupling to the handlebar.

The method for making a snow driving device according to the present invention, which method is also included in the scope of the invention, is characterized in that it comprises a thermoplastic material injection molding method, in which the mentioned main shoe is made in a single piece with said gripping attachments for an user boots, the steering shoe being made as a single piece with said rotary supporting bracket therefor.

With respect to prior ski and snow-board systems, the snow driving device according to the present invention provides the advantage that it is much more stable (and accordingly much more safe) and that it can be easily used even by unskilled persons. Moreover, it can be also used both on flat and on sloping surfaces owing to an upright position assumed by the user one foot of which can be caused to rest on the implement, whereas the other foot can be used for pushing the implement. Moreover, the above mentioned preloading system for preloading the handlebar foot element will prevent any dangerous damages due to possible fallings. It, moreover, will allow the handlebar to be easily bent, by collapsing it on the surface of the main shoe, thereby the subject device can be easily stored and transported in a reduced size condition.

The inventive method, finally, provides the advantage that it will allow to quickly and unexpensively make all of the portions of the subject device which, accordingly, will constitute a reliable unexpensive article of manufacture which can be produced on a large scale.

### BRIEF DESCRIPTION OF THE DRAWINGS

Further characteristics and advantages of the present invention will become more apparent from the following detailed disclosure of a preferred, though not exclusive, embodiment of the snow driving device or implement according to the present invention, which is illustrated, by way of an exemplary but not limitative example, in the figures of the accompanying drawings, where:
Figure 1 is a general view illustrating the snow driving device according to the present invention as well as the use method therefor;
Figure 2 is a side view illustrating the snow driving device or implement shown in figure 1;
Figures 3 and 4 are respective top plan views illustrating the snow driving device of figure 2 in an offset parallel foot embodiment and in an aligned foot embodiment thereof;
Figure 5 is a front view illustrating the snow driving device or implement of figure 1;
Figure 6 illustrates the coupling preloaded articulated system for coupling the handlebar foot element to the steering shoe;
Figures 7 and 8 illustrate a detail of the articulated coupling system of figure 6, either with or without shock absorbing means;
Figure 9 illustrates a detail of a bayonet coupling for coupling a gripping element on the handlebar;
Figure 10 illustrates a condition of the snow driving device in which the handles are collapsed on the body of the handlebar;
   and
Figure 11 is an exploded view illustrating the snow driving device of figure 1 under a packaging and storing condition thereof.

### DESCRIPTION OF THE PREFERRED EMBODIMENTS

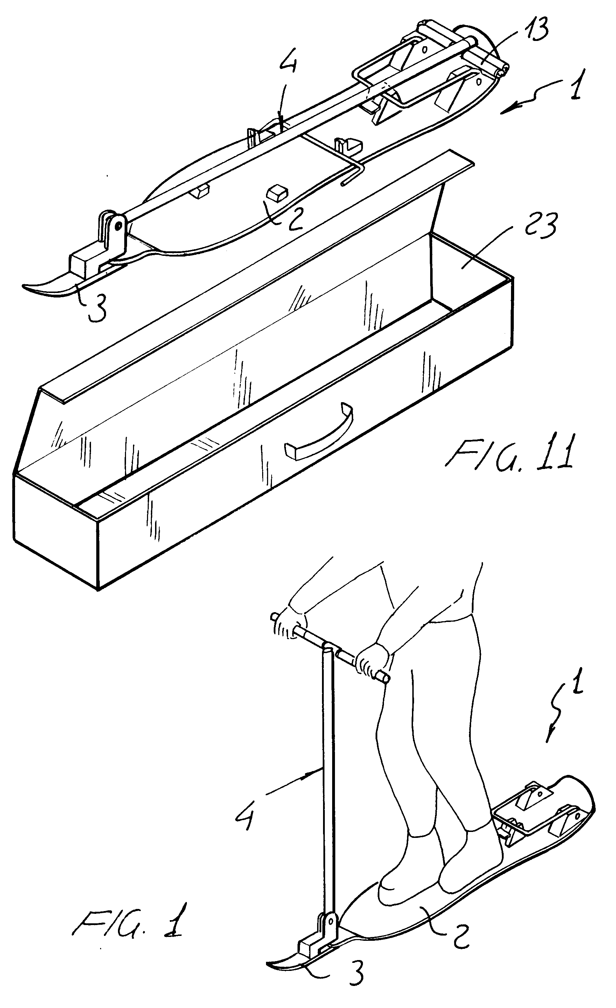

With reference to the drawings, the snow driving device according to the invention has been generally indicated by the reference number 1 in figure 1. This device or implement, in particular, essentially comprises a main shoe 2, made of a snow sliding material, as well as a steering shoe 3, arranged on the front of the main shoe, and which can be properly steered on a sliding surface by operating a handlebar 4.

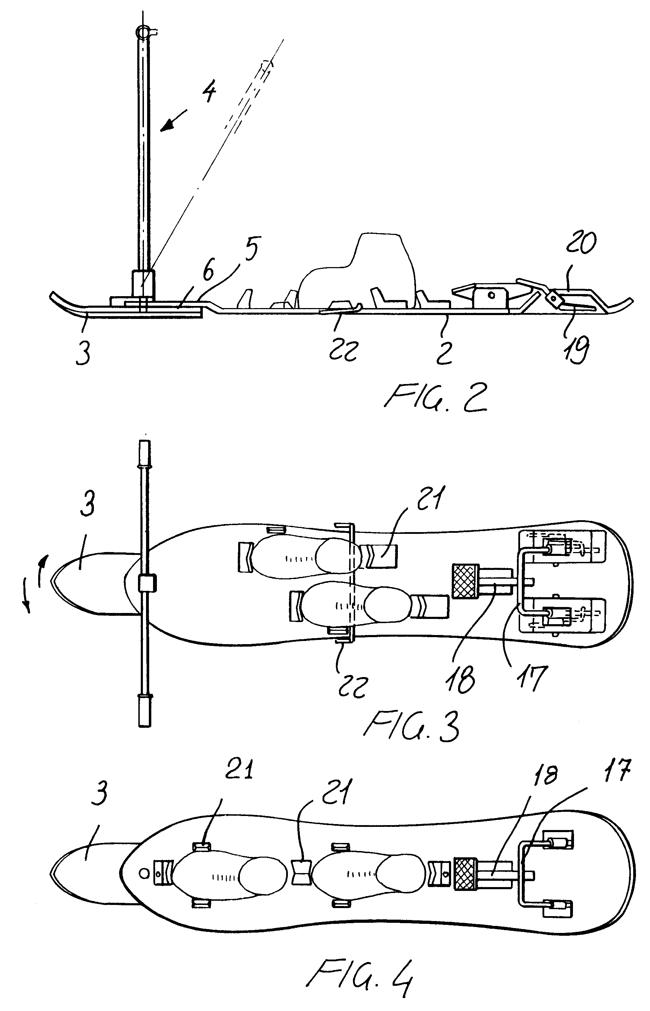

As clearly shown in figure 2, the main shoe 2 is provided with a front portion 5, raised from the bearing surface or plane. This front portion 5, accordingly, is arranged over the portion 6 of the steering shoe 3, thereby recovering the sliding plane of the implement. The mentioned portions are mutually connected to one another so as to allow the steering shoe 3 to turn with respect to the main shoe 2 (see the arrows in figure 3).

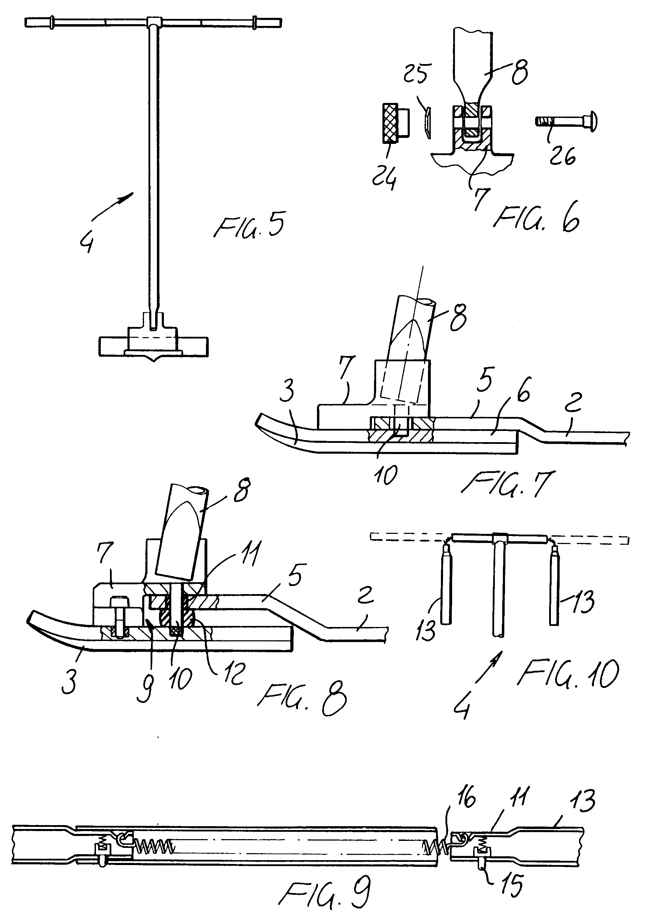

The steering shoe 3 is in turn provided with a flange 7 (figure 7) which is rigid, on a side, with the body of said shoe and, on the other side, with the foot element 8 of the handlebar 4. The flange 7 is moreover provided, on the side thereof receiving the mentioned raised portion 5 of the shoe 2, with a recess or cut-out 9, thereunder is affixed a projecting pin 10.

As is clearly shown in the cross sectional view of figure 8, said pin 10 is rotatably freely housed in a seat or recess 11 provided on the portion 5 of the shoe 2, and the remaining part of said pin is connected, at the top to the bracket 7 and, at the bottom, to the shoe 3. Thus, as the flange 7 is operated by the foot element 8 of the handlebar 4 engaging in a seat, not shown, of said flange 7, then the pin 10 will be turned in the seat or recess 11 on the shoe 2 thereby causing the steering shoe 3 to swing on the sliding plane of the implement (see the arrows of figure 3).

Advantageously, as clearly shown in figure 8, the mentioned recess 9 has such a depth to receive therein a shock absorbing means 12 (a rubber or the like plug) arranged between the mentioned portions 5 and 6 of the respective shoes 2 and 3, and being advantageously held in an engagement position for coaxially engaging on the mentioned pin 10.

In order to prevent any damages from occurring to the user, the handlebar 4 is of a type which is articulatedly coupled to the steering shoe 3 and being provided with a preloading system. As clearly shown in figures 5 and 6, the foot element 8 of the handlebar 4 is locked on the bracket 7, with a possibility of performing a swinging movement. To that end is provided a fork-like coupling, including a recess for housing a throughgoing bolt 26, including a knurled knob 24 and a related protecting washer element 25. The disclosed preloading system will allow, by operating the knob 24, to set a desired resistance against flexure of the handlebar on the foot element 8, so as to allow the handlebar to be easily bent under an excessive and dangerous load.

In order to allow to reduce the size of the subject device for packaging or shipment purposes, the handlebar 4 is provided with gripping handle 13 of a removable type. In the embodiment being shown in figures 9 and 10, said gripping handles are provided with a tapering portion 14 which can be bayonet coupled into the central body of the handlebar. Advantageously, a locking post 15 is moreover provided, for locking said handlebar, as well as being moreover provided flexible holding means 16 for holding the gripping handle 13 on the handlebar body, in a withdrawn position of said gripping handle.

Figures 2 and 4 shows other main fittings included in the snow driving device according to the invention and, more specifically, a braking system and gripping points for the users boots.

With reference to the first fitting, it comprises a U-shape horizontal arm 17, driven by a pedal lever 18, the arms 19 of which pass through a corresponding window 20 formed through the shoe 2, so as to provide access to the snow. As the pedal lever 18 is operated in a pressing direction thereof, it will cause the arm 17 to be raised and the arms 19 of said lever to be lowered, so as to provide a gripping action on the snow, so as to brake the device.

The gripping means for the user's boots are in turn constituted by fixed joints 21, which are so arranged as to allow the device to be used either with offset parallel feet (figure 3) or with aligned feet (figure 4). The system can also be provided with automatic stop devices 22 (ski-stop implements).

Said device is moreover provided with means (not shown) for allowing a quick connection of a first driving or motor assembly on the rear part of the shoe 2, to provide a driving force either on flat or on slightly sloping surfaces.

Figure 11 illustrates a possible procedure for collapsing the device according to the present invention so as to reduce the size thereof to be easily shipped in a box 23. In particular, by means of the above mentioned articulated coupling between the handlebar 4 and the bracket 7, said handlebar can be collapsed against the surface of the shoe 2, thereby providing a reduced size article which can be easily transported.

The method for making the subject implement, as above disclosed, consists advantageously of an injection molding method in which thermoplastics materials are injection molded, thereby providing all of the component parts of the subject device. Advantageously, the boot fastening elements 21 will be made in a single piece with the shoe 2, whereas the bracket 7 will be made in single piece with the steering shoe 3.

As the subject device is driven downhill, it can be driven with the hands holding the handlebar and both feet arranged on the shoe 2 (figure 1). As the device is driven on a flat surface, on the other hand, the user can cause one only foot to bear against the implement, whereas said user, by his/her other foot, will push the implement to cause it to advance.

While the invention has been disclosed and illustrated with reference to preferred embodiments thereof, it should be apparent that the disclosed embodiments are susceptible to many modifications and variations all of which will fall within the scope of the invention.

Thus, for example, the articulated coupling for connecting the handlebar to the steering shoe can be different from that which has been disclosed. Likewise, it would be possible to use a different handlebar preloading system, a different handlebar collapsing system as well as a different braking system. Moreover, the shoe 2 can also be made without boot fastening elements, for example for a not competitive use of the implement.

The used materials, finally, can be any depending on requirements. Advantageously, however, thermoplastics material would be preferred, since they would allow to make the subject implement by unexpensive molding methods.

## Claims

1. A snow driving device, characterized in that said device comprises a main supporting shoe (2) for supporting a person weight and steering means for steering said main shoe and being provided with an operating device.

2. A snow driving device according to Claim 1, characterized in that said steering means comprise a steering shoe (3) arranged in front of said main shoe (2), and rotatable on a sliding surface of said device, said operating device comprising a handlebar (4) for controlling said steering shoe (3) with respect said main shoe (2).

3. A snow driving device according to Claim 2, characterized in that said handlebar (4) is provided with operating gripping handles (13) as well as with a foot element (8) coupled to said steering shoe (3) so as to cause the latter to be driven with respect to said main shoe (2).

4. A snow driving device according to Claim 2, characterized in that said device comprises moreover rotary supporting means for rotatably supporting said steering shoe (3) with respect to said main shoe (2), said rotary supporting means being arranged at a mutual engagement section between said shoes (2, 3).

5. A snow driving device according to Claim 4, characterized in that said rotary supporting means for supporting said steering shoe (3) comprise a bracket (7) connected, on a side, to said directional shoe (3) and, on another side, to said foot element (8) of said handlebar (4), said bracket (7) being moreover provided with an engagement pin (10) for rotatably engaging said directional shoe (3) to said main shoe (2).

6. A snow driving device according to Claim 5, characterized in that said device comprises moreover an articulated coupling for articulatedly engaging said handlebar (9) foot element (8) with said steering shoe (2) bracket (7), preloading means being moreover provided at said articulated coupling.

7. A snow driving device according to Claim 6, characterized in that said preloading means comprise a knurled knob (24) and bolt (26) assembly, passing through a seat formed in a fork-like coupling between said handlebar (4) foot element (8) and bracket (7).

8. A snow driving device according to Claim 5, characterized in that said bracket (7) is moreover provided with a recess (9) for receiving, at a rotary engagement position on said pin (10), said portions (5) and (6) of said shoes (2) and (3) respectively.

9. A snow driving device according to Claim 8, characterized in that the front portion (5) of the main shoe (2) is raised and arranged above the corresponding portion (6) of said steering shoe (3).

10. A snow driving device according to Claim 9, characterized in that between said portions (5, 6) a shock absorbing element (12) is arranged.

11. A snow driving device according to Claim 3, characterized in that said gripping handles (13) of said handlebar (4) are of a removable type.

12. A snow driving device according to Claim 11, characterized in that each said gripping handle (13) can be bayonet engaged on said handlebar.

13. A snow driving device according to one or more of the preceding claims, characterized in that said device comprises moreover a foot operated braking system, said braking system comprising essentially an arm (17) operated by a pedal lever (18) and having a U-shape, said pedal lever including arms (19) which are swingably pivoted in a cross direction with respect to said shoe (2) and therefrom said arms (19) project through a corresponding window (20) provided through the rear portion of said shoe (2).

14. A snow driving device according to one or more of the preceding claims, characterized in that said main shoe (2) is provided with engagement fastening means (21) for engagement the boots of an user, possibly in combination with the provision of stop devices (22) for automatically stopping said snow driving device.

15. A snow driving device according to one or more of the preceding claims, characterized in that said device comprises moreover, on the rear of said main shoe (2) a recess for engagement therein pushing motor means for driving said device on the snow.

16. A method for making a snow driving device according to one or more of the preceding claims, characterized in that said method provides to mold said main shoe (2), in a single piece with said fastening means (21), as well as to mold said steering shoe (3) in a single piece with said bracket (17) for rotatably supporting said steering shoe (3).

17. A method according to Claim 16, characterized in that said method comprises a thermoplastic material injection molding method.
